# EUROPEAN PATENT SPECIFICATION

(11) **EP 2 665 320 B1**
(45) Date of publication and mention of the grant of the patent: **15.05.2019**
(21) Application number: 12736695.3
(22) Date of filing: 17.01.2012
(51) Int. Cl.: H04W 72/12, H04W 28/06

(54) **SCHEDULING METHOD, BASE STATION, AND SYSTEM FOR EVOLVED BASE STATION IN LONG TERM EVOLUTION SYSTEM**
PLANUNGSVERFAHREN, BASISSTATION UND SYSTEM FÜR EINE ENTWICKELTE BASISSTATION IN EINEM LTE-SYSTEM
PROCÉDÉ DE PLANIFICATION, STATION DE BASE ET SYSTÈME POUR STATION DE BASE ÉVOLUÉE DANS UN SYSTÈME D'ÉVOLUTION À LONG TERME

(30) Priority: 17.01.2011 CN 201110009301
(43) Date of publication of application: 20.11.2013
(73) Proprietor: Huawei Technologies Co., Ltd., Longgang District Shenzhen, Guangdong 518129 (CN)
(72) Inventor: QUAN, Wei, Shenzhen Guangdong 518129 (CN); ZHANG, Jian, Shenzhen Guangdong 518129 (CN)
(74) Representative: Pfenning, Meinig & Partner mbB
(86) International application number: PCT/CN2012/070471
(87) International publication number: WO 2012/097722

(56) References cited:
- EP-A2- 2 244 409
- WO-A1-2010/051209
- CN-A- 101 500 309
- CN-A- 101 925 190
- CN-A- 101 932 019
- US-A1- 2010 329 204

## Description

### FIELD OF THE TECHNOLOGY

The present invention relates to the field of long term evolution system technologies, and in particular to a scheduling method of evolved NodeB, a method of data transmission, an evolved NodeB and a user equipment in a long term evolution system and the long term evolution system.

### BACKGROUND

In a long term evolution (Long Term Evolution, LTE) system, an evolved NodeB (evolved NodeB, eNodeB, i.e. eNB) usually uses physical downlink control channel (Physical Downlink Control Channel, PDCCH) signaling to perform scheduling. The PDCCH signaling carries resource allocated for a user equipment (User Equipment, UE), and the resource includes physical resource infomation, information of adopted modulation and codec scheme (Modulation and Codec Scheme, MCS), new data indicator (New Data Indicator, NDI) etc. so as to schedule uplink and downlink data transmission of the UE. Meanwhile, the resource may also include power control information and, if the scheduling is uplink scheduling, may further include a request asking the UE to report channel quality indicator (Channel Quality Indicator, CQI). After receiving the PDCCH signaling, the UE analyzes the above relavent information carried in the signaling and performs data transceiving on the corresponding physical resource according to the informed format.

The PDCCH signaling itself needs to be carried on certain physical resource for transmission. For example, in an cell with a bandwidth of 5MHz, generally, a single transmission time interval (Transmission Time Interval, TTI) can only carry about a dozen PDCCHs for scheduling user data, which include both uplink PDCCH and downlink PDCCH, therefore, in average only carry several to about ten uplink PDCCHs and downlink PDCCHs. That is to say, in average very few users can be scheduled in a TTI. If dynamic scheduling is adopted, a PDCCH signaling is needed for scheduling each transport block (Transport Block), which means that a PDCCH signaling is needed whether scheduling a large transport block, or scheduling a very small transport block. It can be understood that, if most of the transport blocks scheduled by the PDCCH signaling are large, then the use of the PDCCH signaling is efficient, the situation of limited PDCCHs is not serious, and the handling capacity of the system is high; however, if most of the transport blocks scheduled by the PDCCH signaling are small, the PDCCH signaling is of low efficiency, the situation of limited PDCCHs is serious and the handling capacity will be negatively affected. For example, in the system with a bandwidth of 5MHz, there are about 20 physical resource blocks (Physical Resource Block, PRB) which can be used to transmit data. Assuming that a certain TTI has 10 PDCCH signalings for scheduling downlink data, then if other condition persists, when the TB block scheduled by a PDCCH can occupy 20 PRBs, the handling capacity of the system can reach a high peak rate with only one PDCCH signaling; but if the TB block scheduled by each PDCCH is small and can only occupy a single PRB, then 10 PDCCHs can only schedule 10 transport blocks, the other 10 PRBs cannot be scheduled since no more PDCCH is available, thus the handling capacity of the present system will be affected by the limitation of PDCCH. That is to say, the LTE system is more suitable for scheduling larger data packets so as to achieve higher handling capacity of the system.

However, with widely spread of smart phone (Smart Phone) or smart device (Smart Device) (including smart cellphone, smart telephone and other smart terminal of various types), various types of services become available, instant message services, such as QQ, MSN and so on, need to transmit and receive many small packets, if each small packet needs a PDCCH signaling for scheduling and the data size scheduled by each PDCCH signaling is small, the efficiency is quite low. When most of the transmitted user data packets are small, the cost of PDCCH will be large, resulting in that the handling capacity of the system will be greatly limited. Moreover, in heterogeneous network scenario, in order to reduce the interference, some subframes (if configured as ABS (Almost blank subframe, almost blank subframe)) cannot be used to transmit PDCCH signaling, and thus the actual number of PDCCHs may be further reduced, and under such circumstances the PDCCH capacity will be further limited, which leads to a serious limitation to the system capacity.

Document D1 (WO 2010/051209 A1) discloses a method and apparatus for monitoring and processing component carriers.

Document D2 (EP 2244409 A2) discloses a method for pairing carriers in a wireless multi-carrier communication system.

### SUMMARY

Embodiments of the present invention provide a scheduling method of evolved NodeB, a method of data transmission, an evolved NodeB, a user equipment in a long term evolution system and the long term evolution system, so as to further reduce the cost of PDCCH and increase the capacity of the system.

An embodiment of the present invention provides a scheduling method of evolved NodeB in long term evolution system, including;
sending, by an evolved NodeB to a user equipment, a downlink media access control layer protocol data unit, MAC PDU for transmitting downlink data, where the downlink MAC PDU carries a media access control control element, MAC CE, and the MAC CE carries uplink resource allocation information for indicating an uplink resource to the user equipment;
receiving, by the evolved NodeB, an uplink MAC PDU sent by the user equipment according to the uplink resource allocation information;
wherein if the uplink resource allocation information comprises physical resource allocated for the user equipment, modulation and codec scheme, size of the MAC PDU and time at which the user equipment is indicated to send the MAC PDU, the receiving, by the evoveld NodeB, the uplink MAC PDU sent by the user equipment according to the uplink resource allocation information comprises:
   receiving, by the evloved NodeB, the uplink MAC PDU sent by the user equipment to the evolved NodeB at the time using the physical resource according to the modulation and codec scheme and the size of the MAC PDU.

Another embodiment of the present invention further provides a method of data transmission, including:
receiving a downlink media access control protocol data unit, MAC PDU, sent by an evolved NodeB for transmitting downlink data, where the downlink MAC PDU carries a media access control control element, MAC CE, and the MAC CE carries uplink resource allocation information for indicating an uplink resource to a user equipment;
sending an uplink MAC PDU to the evolved NodeB by using the uplink resource allocation information carried by the MAC CE;
wherein if the uplink resource allocation information comprises physical resource allocated for the user equipment, modulation and codec scheme, size of the MAC PDU and time at which the user equipment is indicated to send the MAC PDU;
then sending the uplink MAC PDU to the evolved NodeB by using any one or any combination of the parameters specifically comprises:
   the user equipment sends the uplink MAC PDU to the evolved NodeB at the time using the physical resource according to the modulation and codec scheme and the size of the MAC PDU.

Another embodiment of the present invention further provides an evolved NodeB, including:
a sending unit, configured to send to a user equipment a downlink media access control protocol data unit, MAC PDU for transmitting downlink data, where the downlink MAC PDU carries a media access control control element, MAC CE, and the MAC CE carries uplink resource allocation information for indicating an uplink resource to the user equipment;
a receiving unit, configured to receive an uplink MAC PDU sent by the user equipment according to the uplink resource allocation information;
wherein if the uplink resource allocation information comprises physical resource allocated for the user equipment, modulation and codec scheme, size of the MAC PDU and time at which the user equipment is indicated to send the MAC PDU, the receiving unit (72) is further configured to receive the uplink MAC PDU sent by the user equipment to the evolved NodeB at the time using the physical resource according to the modulation and codec scheme and the size of the MAC PDU.

Another embodiment of the present invention further provides a user equipment, including:
an information receiving unit, configured to receive a downlink media access control protocol data unit, MAC PDU sent by an evolved NodeB for transmitting downlink data, where the downlink MAC PDU carries a media access control control element, MAC CE, and the MAC CE carries uplink resource allocation information for indicating an uplink resource to the user equipment;
a data sending unit, configured to send an uplink MAC PDU to the evolved NodeB by using the uplink resource allocation information carried by the MAC CE;
wherein if the uplink resource allocation information comprises physical resource allocated for the user equipment, modulation and codec scheme, size of the MAC PDU and time at which the user equipment is indicated to send the MAC PDU; the data sending unit (82) is further configured to send the uplink MAC PDU to the evolved NodeB at the time using the physical resource according to the modulation and codec scheme and the size of the MACPDU.

Another embodiment of the present invention further provides a long term evolution system, including an evolved NodeB and a user equipment described above.

In the scheduling method of evolved NodeB, the method of data transmission, the evolved NodeB, and the user equipment in a long-term evolution system and the long term evolution system provided by the embodiments of the present invention, scheduling is performed by using MAC CE in downlink MAC PDU for downlink data transmission, and then the cost of PDCCH is effectively reduced, in particular in case of transmitting a large number of small packets, and thus the capacity of the system is increased.

### BRIEF DESCRIPTION OF THE DRAWINGS

In order to illustrate the technical solutions in embodiments of the present invention more clearly, accompany drawings used in the embodiments will be briefly described, apparently, the accompany drawings described below are only part of the embodiments. For those skilled in the art, other drawings can be obtained on the basis of the theses drawings without creative efforts.
Fig. 1 is a flow diagram of a scheduling method of evolved NodeB in a long term evolution system provided by an embodiment of the present invention;
Fig. 2 is a flow diagram of a data transmission method provided by an embodiment of the present invention;
Fig. 3 is a flow diagram of another scheduling method of evolved NodeB in a long term evolution system provided by an embodiment of the present invention;
Fig. 4 is a schematic view of information data transmission in another scheduling method of evolved NodeB in a long term evolution system provided by an embodiment of the present invention;
Fig. 5A to 5E are schematic views of information data transmission in another scheduling method of evolved NodeB in a long term evolution system provided by an embodiment of the present invention;
Fig. 6A is a schematic view of a format of a MAC CE in a scheduling method of evolved NodeB in a long term evolution system provided by an embodiment of the present invention;
Fig. 6B is a schematic view of another format of a MAC CE in a scheduling method of evolved NodeB in a long term evolution system provided by an embodiment of the present invention;
Fig. 7 is a schematic structure diagram of an evolved NodeB for realizing above scheduling method of evolved NodeB in a long term evolution system provided by an embodiment of the present invention;
Fig. 8 is a schematic structure diagram of a user equipment for realizing above method of data transmission provided by an embodiment of the present invention;
Fig. 9 is a schematic structure diagram of a long term evolution system for realizing above scheduling method of for evolved NodeB in a long term evolution system provided by an embodiment of the present invention.

### DETAILED DESCRIPTION

The technical solutions of embodiments of the present invention will be described more clearly and comprehensively in combination with the accompanying drawings of the embodiments of the present invention. Obviously, the described embodiments are only part of the embodiments of the present invention, but not all of the embodiments. Other embodiments obtained by those of ordinary skill in the art based on the embodiments of the present invention without creative efforts are all within the protection scope of the present invention. In a LTE system, many uplink and downlink data (signaling) have a matching relationship or coupling relationship therebetween to some degree. For example, for RRC signaling, after an eNB sends a RRC setup (or reconfiguration) message to a UE, the UE will respond to the eNB with a RRC setup (or reconfiguration) complete message; or for data transmission based on TCP, after an eNB sends one or more downlink TCP data packets to a UE, the UE will respond to the eNB (in fact to a peer entity which communicates with the UE, such as a server) with TCP ACK; or for data transmission based on RLC AM mode, after an eNB sends one or more downlink RLC data packets to a UE, the UE will respond a RLC status report to the eNB. With the help of the coupling relationship between the uplink data and downlink data, the eNB can use MAC CE to allocate for the UE an uplink resource possibly needed in the future when performing downlink data transmission, instead of using PDCCH signaling to allocate an uplink resource for a UE only after the UE actually generates the uplink data and sends a request. Thus this brings a reference for eNB scheduling, and provides possibility of optimizing the scheduling.

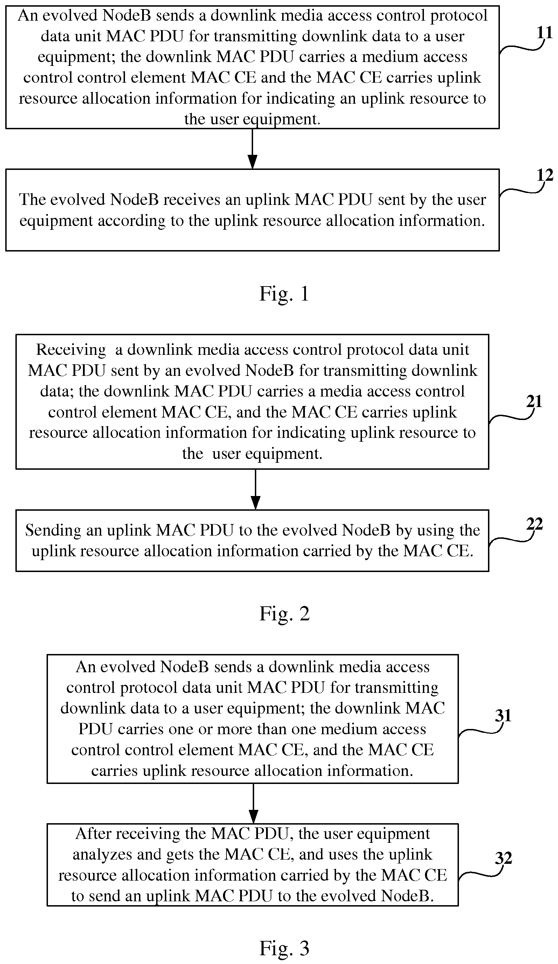

Fig. 1 is a flow diagram of a scheduling method of evolved NodeB in a long-term evolution system provided by an embodiment of the present invention. As shown in Fig. 1, the method includes:
Step 11, an evolved NodeB sends a downlink media access control protocol data unit (Media Access Control Protocol Data Unit, MAC PDU) for transmitting downlink data to a user equipment, the downlink MAC PDU carries a medium access control control element (Medium Access Control Control Element, MAC CE), and the MAC CE carries uplink resource allocation information for indicating an uplink resource to the user equipment.
   Generally, besides the MAC CE, the MAC PDU also carries downlink data of the user equipment. The downlink data includes any one or any combination of media access control service data unit (Media Access Control Service Data Unit, MAC SDU) and other MAC CE, so that the user equipment can use the uplink resource allocation information carried by the MAC CE to send an uplink MAC PDU to the evolved NodeB after receiving the downlink MAC PDU. The uplink MAC PDU includes at least one of data, buffer status report (Buffer Status Report, BSR) and other MAC CE. The uplink resource allocation information can be acquired by the evolved NodeB through predicting according to the downlink data information. In other words, the evolved NodeB can predict subsequent possible uplink data transmission according to the downlink data information, thus can allocate an uplink resource for the UE in advance, and use the MAC CE to carry uplink resource allocation information allocated for the UE.
Step 12, the evolved NodeB receives an uplink MAC PDU sent by the user equipment according to the uplink resource allocation information. The uplink MAC PDU includes at least one of: data, BSR and other MAC CE.

The MAC CE includes logical channel identify (Logical Channel Identify, LCID) and content. If the value of the LCID is different, the information carried by the content portion of the MAC CE will be different. In the present embodiment, the value of the logical channel identify is used to identify that the content is uplink resource allocation information.

The uplink resource allocation information can include at least one of the following parameters: physical resource allocated for the user equipment, modulation and codec schemee, size of the MAC PDU and time at which the user equipment is indicated to send the MAC PDU. The uplink resource allocation information can be acquired by the eNB through predicting according to the downlink data information.

If the uplink resource allocation information includes: the physical resource allocated for the user equipment, the modulation and codec scheme, the size of the MAC PDU and the time at which the user equipment is indicated to send the MAC PDU, then the evolved NodeB receiving the uplink MAC PDU sent by the user equipment according to the uplink resource allocation information can specifically be: the evolved NodeB receives the uplink MAC PDU sent by the user equipment to the evolved NodeB at the time according to the modulation and codec scheme and the size of the MAC PDU by using the physical resource. When the uplink resource allocation information only includes one or part of the parameters above, the rest parameters can be configured through a radio resource control (Radio Resource Control, RRC) message or fixedly set by a protocol, so as to be acquired by the user equipment, and thus the user equipment can send the uplink MAC PDU to the evolved NodeB by using the uplink resource allocation information configured by the MAC CE or the RRC message or fixedly set by a protocol.

The evolved NodeB can further send at least one piece of the following information to the user equipment:
Information for indicating signaling radio bearer (Signaling Radio Bearer, SRB) or data radio bearer (Data Radio Bearer, DRB) which uses the physical resource when the user equipment sends the uplink data, where the information is carried in the uplink resource allocation information, or in the RRC message. In other words, the uplink resource allocation information can further include information for indicating signaling radio bearer (Signaling Radio Bearer, SRB), or data radio beater (Data Radio Bearer, DRB) or SRB and DRB which use the physical resource when the user equipment sends the uplink data; or, the information for indicating the SRB, or DRB or SRB and DRB which use the physical resource when the user equipment sends the uplink data is configured by the evolved NodeB through a RRC message, so that the uplink MAC PDU sent by the user equipment to the evolved NodeB through using the physical resource at the time according to the modulation and codec scheme and the size of the MAC PDU only includes data of the SRB or DRB or SRB and DRB for which indication information has been allocated and sent by the evolved NodeB, when the uplink MAC PDU includes data.

If the uplink resource allocation information includes the time at which the user equipment is indicated to send the MAC PDU, then the scheduling method of evolved NodeB in a long-term evolution system provided by an embodiment of the present invention can further include:
the evolved NodeB checks whether the user equipment receives the MAC CE before the time;
if the user equipment does not receive the MAC CE before the time, the evolved NodeB releases the physical resource allocated for the user equipment so as to allocate the physical resource to other user equipment.

In the above embodiment, the eNB performs scheduling by using the MAC CE in the downlink MAC PDU for transmitting downlink data, so that the PDCCH cost is effectively saved, especially in the case that there are large amount of small packets to be transmitted, thus the capacity of the system is increased as much as possible.

Correspondingly, Fig. 2 is a flow diagram of a data transmission method provided by an embodiment of the present invention. The present embodiment is the scheduling processing method of user equipment side, including:
Step 21, Receiving a downlink media access control protocol data unit MAC PDU sent by an evolved NodeB for transmitting downlink data. The downlink MAC PDU carries a media access control control element, MAC CE, and the MAC CE carries uplink resource allocation information for indicating uplink resource to the user equipment. Generally, besides the MAC CE, the MAC PDU further carries downlink data of the user equipment, including any one or any combination of MAC SDU or other MAC CE.
   Please refer to the illustration in above Step 11 for details of the uplink resource allocation information, which can include at least one of the following parameters: physical resource allocated for the user equipment, modulation and codec scheme, size of the MAC PDU and time at which the user equipment is indicated to send the MAC PDU.
Step 22, Sending an uplink MAC PDU to the evolved NodeB by using the uplink resource allocation information carried by the MAC CE. The uplink MAC PDU includes at least one of: data, BSR and other MAC CE.

For example, the user equipment adopts any one or any combination of the parameters to transmit any one or any combination of data, BSR or other MAC CE to the evolved NodeB.

If the uplink resource allocation information includes: the physical resource allocated for the UE, the modulation and codec scheme, the size of the MAC PDU and the time at which the user equipment is indicated to send the MAC PDU, then the user equipment adopting any one or any combination of the parameters to transmit the uplink MAC PDU to the evolved NodeB can specifically be: the user equipment transmits the uplink MAC PDU to the evolved NodeB at the time using the physical resource according to the modulation and codec scheme and the size of the MAC PDU.

The user equipment can further receive at least one piece of the following information sent by the evolved NodeB: information for indicating SRB, or DRB which uses the physical resource when the user equipment sends the uplink data, where the information is carried in the uplink resource allocation information, or in a RRC message. If the evolved NodeB indicates through a RRC message the SRB, DRB or SRB and DRB which use the physical resource when the user equipment sends the uplink data, and the uplink MAC PDU sent by the user equipment to the evolved NodeB contains data, then the data contained in the uplink MAC PDU only includes data of the SRB, or DRB or SRB and DRB for which indication information has been allocated and sent by the evolved NodeB.

If the uplink resource allocation information includes the time at which the user equipment is indicated to send the MAC PDU, and at the indicated time the user equipment has no data to transmit, then the user equipment sends any one or combination of Padding BSR and Padding. If the time at which the user equipment receives the MAC CE goes beyond the time contained in the uplink resource allocation information, at which the user equipment is indicated to send the MAC PDU, then the user equipment will ignore the uplink resource allocated for the user equipment carried in the MAC CE.

When the time contained in the uplink resource allocation information comes, which indicates when the user equipment sends the MAC PDU, if the user equipment has no data to send or the data to be sent cannot fill up the physical resource allocated in the uplink resource allocation information, then the user equipment informs a RLC entity corresponding to a RB according to the size of the uplink resource to assemble a RLC status report, and uploads the RLC status report together with any one or combination of possible Padding BSR and Padding at the time which indicates when the user equipment sends the MAC PDU, such time is contained in the uplink resource allocation information.

The user equipment informs the RLC entity corresponding to the RB indicated by the uplink resource allocation information according to the size of the uplink resource. The RB indicated by the uplink resource allocation information is the SRB, or DRB or SRB and DRB specified in the information for indicating the SRB, or DRB or SRB and DRB which use the physical resource when the user equipment sends the uplink data.

Fig. 3 is a flow diagram of another scheduling method of evolved NodeB in a long-term evolution system provided by an embodiment of the present invention. The present embodiment combines the embodiments shown above in Fig.1 and Fig. 2, that is, includes operations at both the evolved NodeB side and the user equipment side. The scheduling method specifically includes:
Step 31, an evolved NodeB sends a downlink media access control protocol data unit (Media Access Control Protocol Data Unit, MAC PDU) for transmitting downlink data to a user equipment. The downlink MAC PDU carries one or more than one medium access control control element (Medium Access Control Control Element, MAC CE), and the MAC CE carries uplink resource allocation information. The uplink resource allocation information can include any one or any combination of the following parameters: physical resource allocated for the user equipment, modulation and codec scheme, size of the MAC PDU and time at which the user equipment is indicated to send the MAC PDU. That is to say, the resource allocated for the user equipment includes but not is limited to the physical resource (such as position and size of the physical resource block) and/or the modulation and codec scheme and/or the size of TB block (i.e. MAC PDU) to be uplink transmitted by the user equipment through using the resource allocated by the MAC CE and/or the time at which the user equipment is indicated to send MAC PDU.
Step 32, after receiving the MAC PDU, the user equipment analyzes and gets the MAC CE, and uses the uplink resource allocation information carried by the MAC CE to send an uplink MAC PDU to the evolved NodeB, please refer to the illustration in Step 12, the uplink MAC PDU includes any one or combination of data, BSR and other MAC CE. Specifically, the user equipment uses any one or any combination of the parameters to send uplink MAC PDU to the evolved NodeB. If the uplink resource allocation information only contains part of the above parameters, the user equipment can also send the uplink MAC PDU by using corresponding resource according to the rest parameters configured by a RRC message or fixedly set by protocol. When the uplink resource allocation information includes the physical resource allocated to the user equipment, the modulation and codec scheme, the size of the TB block (i.e. MAC PDU) uplink transmitted by the user equipment through using the resource indicated by the uplink resource allocation information carried by the MAC CE and the time at which the user equipment is indicated to send the MAC PDU, then the user equipment sends the uplink MAC PDU to the evolved NodeB at the time indicated in the uplink resource allocation information, by using the physical resource indicated by the uplink resource allocation information carried by the MAC CE, and according to the modulation and codec scheme and the size of TB, where the uplink MAC PDU includes any one or any combination of data, buffer status report (Buffer Status Report, BSR) and other MAC CE such as PHR (Power HeadRoom Report, power headroom report).

When the time contained in the uplink resource allocation information comes, which indicates when the user equipment sends the MAC PDU, if the user equipment has no data to transmit, then the user equipment sends Padding BSR and Padding, or any one of them at the time indicated by the uplink resource allocation information.

If the time at which the user equipment receives the MAC PDU goes beyond the time indicated by the uplink resource allocation information, then the user equipment ignores the uplink resource allocation information, that is, the uplink resource allocated for the user equipment carried in the MAC CE.

The uplink resource allocation information carried by the MAC CE can further specify a RB (Radio Bearer, radio bearer) which uses the physical resource when the user equipment sends the uplink data. Please refer to the illustration in Step 11, the uplink resource allocation information includes one or more SRB (Signaling Radio Bearer, signaling radio bearer) and/or one or more DRB (Data Radio Bearer, data radio bearer); or a RB (Radio Bearer, radio bearer) configured by RRC and specified to use the physical resource when the user equipment sends the uplink data includes one or more SRB (Signaling Radio Bearer, signaling radio bearer) and/or one or more DRB (Data Radio Bearer, data radio bearer).

After receiving the MAC PDU, the user equipment sends data and/or BSR and/or other MAC CE such as PHR (Power HeadRoom Report, power headroom report) at the time indicated by the uplink resource allocation information according to the modulation and codec scheme and the size of the TB through using the physical resource indicated by the uplink resource allocation information.

Alternatively, the user equipment only sends data of the SRB and/or DRB, which are configured to be transmitted through using the resource allocated by the MAC CE, to the evolved NodeB by using the physical resource indicated by the uplink resource allocation information at the time indicated by the uplink resource according to the modulation and codec scheme.

Alternatively, if the user equipment has no data to send or the data to send cannot fill up the allocated physical resource at the time indicated by the uplink resource allocation information, then the user equipment informs a RLC entity corresponding to a RB according to the size of the uplink resource to assemble a RLC status report and uploads the RLC status report together with any one or combination of possible Padding BSR and Padding at the time indicated by the MAC CE.

Where, the RB can be a RB indicated by the uplink resource allocation information. Here, the user equipment informing the RLC entity corresponding to the RB according to the size of the uplink resource includes: the user equipment informing the RLC entity corresponding to the RB indicated by the uplink resource allocation information according to size of the uplink resource. The RB can also be a RB which is configured through a RRC message and can perform uplink transmission through using the resource allocated by the uplink resource allocation information in the MAC CE. Here, the user equipment informing the RLC entity corresponding to the RB according to the size of the uplink resource includes: the user equipment informing the RLC entity corresponding to the RB which is configured through the RRC message and performs uplink transmission through using the resource allocated by the uplink resource allocation information in the MAC CE , according to the size of the uplink resource.

Alternatively, at the time indicated by the uplink resource allocation information, if the user equipment has no data to send or the data to be sent cannot fill up the physical resource allocated by the uplink resource allocation information, then if the RB(s) which is/are not indicated to be able to perform uplink transmission through using the allocated resource has(have) data to send, the user equipment transmits data of this (these) RB(s) together with possible Padding BSR and Padding or any one of them according to the size of the rest uplink resource at the time indicated by the MAC CE.

Alternatively, at the time indicated by the uplink resource allocation information, if the user equipment has no data to send or the data to be sent cannot fill up the physical resource allocated, and the RB which can use the allocated physical resource has already assembled the status report but the allocated physical resource is still not filled up, then if the RB(s) which is(are) not indicated to be able to perform uplink transmission through using the allocated resource has(have) data to send, the user equipment transmits the data of this(these) RB(s) together with any one or combination of possible Padding BSR and Padding according to the size of the rest uplink resource at the time indicated by the MAC CE.

Alternatively, the time, which is carried in the uplink resource allocation information and is used to indicate the user equipment when to send MAC PDU, can also be configured by RRC or fixedly set by protocol, generally, the time configured by this mode is a relative time. Similarly, other parameters in the uplink resource allocation information such as the physical resource, the modulation and codec scheme, the size of the MAC PDU etc., can also be configured by RRC or fixedly set by protocol to inform the user equipment. When one or some of the parameters above are sent to the user equipment through being carried by the MAC CE, the rest parameters of the above parameters can be sent to the user equipment by RRC.

If the UE receives resources indicated by the uplink resource allocation information carried by multiple MAC CE (resources indicated by uplink resource allocation information carried by different MAC CE generally are resources of different time, other parameters, such as the physical resource, the modulation and codec scheme, the size of the MAC PDU etc. can be same or not), then it performs above operation on the resource indicated by the uplink resource allocation carried by each MAC CE respectively.

In addition, in order to further save PDCCH resource, one MAC CE can carry multiple pieces of uplink resource allocation information, for example, besides the resource indicated, the MAC CE further includes the subsequent occurrence cycle (time interval) of the resource and/or occurrence times of the resource. The UE performs MAC PDU transmission on the corresponding multiple resources after receiving the MAC CE.

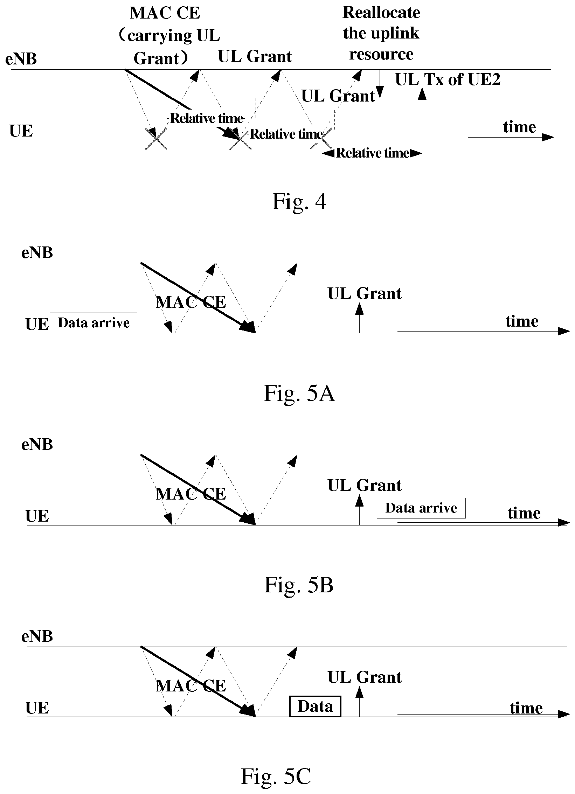

Figure 4 is a schematic view of information data transmission in another scheduling method of evolved NodeB in a long-term evolution system provided by an embodiment of the present invention. As shown in Fig. 4, an eNB schedules uplink data transmission of a UE by carrying a medium access control control elements (Medium Access Control Control Element, MAC CE) in a downlink media access control protocol data unit (Media Access Control Protocol Data Unit, MAC PDU). Where, the arrowed solid slash line represents MAC CE, the arrowed dotted slash line represents the transmission procedure of the MAC CE, the arrowed dot dash slash line represents the feedback of the UE, and the arrowed vertical solid line represents the time when the user equipment sends MAC PDU through using the resource indicated by UL Grant, where the time is indicated by the UL Grand (i.e. the uplink resource allocation information) carried in the MAC CE.

When the eNB transmits downlink MAC PDU to the UE, the eNB can estimate the time and size of the subsequent possible uplink data transmission of the UE. For example, after the eNB sends a radio resource control (Radio Resource Control, RRC) connection reconfiguration (RRC Connection Reconfiguration) message to the UE, if the eNB wishes the UE to transmit an uplink RRC Connection Reconfiguration Complete (radio resource control connection reconfiguration complete) message several milliseconds after the UE receives the RRC connection reconfiguration message; or, the eNB can determine whether data carry polling (Polling) request after the eNB sends radio link control (Radio Link Control, RLC) acknowledgement mode (Acknowledgment Mode, AM) data to the UE, if yes, it means that the eNB wishes the UE to transmit uplink RLC status report to the eNB in future time. That is, the eNB can predict the subsequent possible uplink data transmission with the information of the downlink data, so that the eNB can allocate the uplink resource for the UE in advance and carry the uplink resource allocation information allocated for the UE in the MAC CE. Similar processing method will not be described any more.

The MAC PDU which the eNB sends to the UE carries one (or more) MAC CE, each MAC CE carries a UL Grant to the UE, where the UL Grant contains the uplink resource information allocated for the UE, i.e. the uplink resource allocation information, which includes but is not limit to physical resource (such as position and size of the physical resource block) and/or MCS needed to be used and/or size of transmission block (Tranport Block, TB) to be transmitted, i.e. the size of the MAC PDU and/or time to perform MAC PDU transmission using the resource. Alternatively, the occurrence time of the resource indicated by the uplink resource allocation information carried by the MAC CE, can also be configured by RRC or fixedly set by protocol, generally, the time allocated by this mode is a relative time. Similarly, other parameters of the uplink resource, such as the physical resource, the modulation and codec scheme, the size of the MAC PDU etc, can also be configured through RRC or fixedly set by protocol to inform to the user equipment.

After receiving the MAC CE successfully, the UE performs uplink MAC PDU transmission at the time indicated in the UL Grant through using the allocated resource and MCS. The transmission content can be a buffer status report (Buffer Status Report, BSR) and/or data and/or other MAC CE.

Where, the time indicated by the uplink resource allocation information carried by the MAC CE for the UE to use the UL Grant to perform uplink transmission can be an absolute time, such as SFN (System Frame Number, system frame number) with Sub SFN (system subframe number); and the time can also be a relative time, such as the time relative to the time at which the eNB assembles and sends the MAC CE, or relative to the time at which the UE receives the MAC CE successfully, or relative to the time at which the UE feedbacks ACK after receiving the MAC CE successfully. The indicated time can be in units of TTI, i.e. subframe. If the relative time is relative to the time at which the UE receives the MAC CE successfully, or relative to the time at which the UE feedbacks ACK after receiving the MAC CE successfully, then the time can be set as the time indicating when the eNB is allowed to allocate the physical resource carried by the MAC CE to other users again after the eNB receives the HARQ ACK or NACK, so that if the MAC CE transmission fails finally, the eNB can reallocate the resource to other UE. Alternatively, the occurrence time of the resource indicated by the uplink resource allocation information carried by the MAC CE, can also be configured through the RRC or fixedly set by protocol, generally, the time allocated by this mode is the relative time. Similarly, other parameters of the uplink resource such as the physical resource, the modulation and codec scheme, the size of the MAC PDU etc, can also be configured through RRC or fixedly set by protocol to inform to the UE.

Figs. 5A to 5E are schematic views of information data transmission in another scheduling method of evolved NodeB in a long-term evolution system provided by an embodiment of the present invention. The present embodiment is based on the embodiment shown in Fig. 4. As shown in Fig.5A, if the UE has data to send before receiving the MAC CE or after receiving the MAC CE, then the existing uplink transmission procedure is used.

As shown in Fig. 5B, when the UE receives the data after receiving the MAC CE, that is, after receiving the MAC CE, the UE has no data which needs to be sent and/or the UE has no data available to send at the time indicated by the corresponding UL Grant, then the UE sends Padding BSR and/or Padding on the corresponding uplink resource according to the UL Grant.

As shown in Fig. 5C, when the UE has no data before receiving the MAC CE, but has data to send after receiving the MAC CE, then the UE can use the uplink resource indicated by the UL Grant to perform uplink data transmission and/or BSR transmission according to the capability of the UE. For example, if the UE begins to assemble MAC PDU for data transmission on the corresponding UL Grant, but new data is not arrived, then only Padding BSR and/or Padding will be sent on the UL Grant; if new data are arrived before the UE begins to assemble MAC PDU for transmitting data on the corresponding UL Grant, the data can be transmitted. Alternatively, due to the UE has already received the UL Grant carried in the MAC CE, the scheduling request (Scheduling Request, SR) procedure will not be triggered even if the BSR procedure is triggered, instead the uplink data and/or BSR can be transmitted by using the uplink resource indicated by the UL Grant directly, so as to reduce the uplink power cost and the possible interference brought by the SR transmission. Where, the SR procedure is triggered by BSR, that is, if the BSR is triggered by data, but there is no uplink resource to transmit the BSR, then the SR procedure will be triggered to request uplink resource for sending the BSR and/or the data. If MAC CE is adopted to carry UL Grant, the SR procedure will not be triggered, so that power cost of the UE and the uplink interference can be reduced.

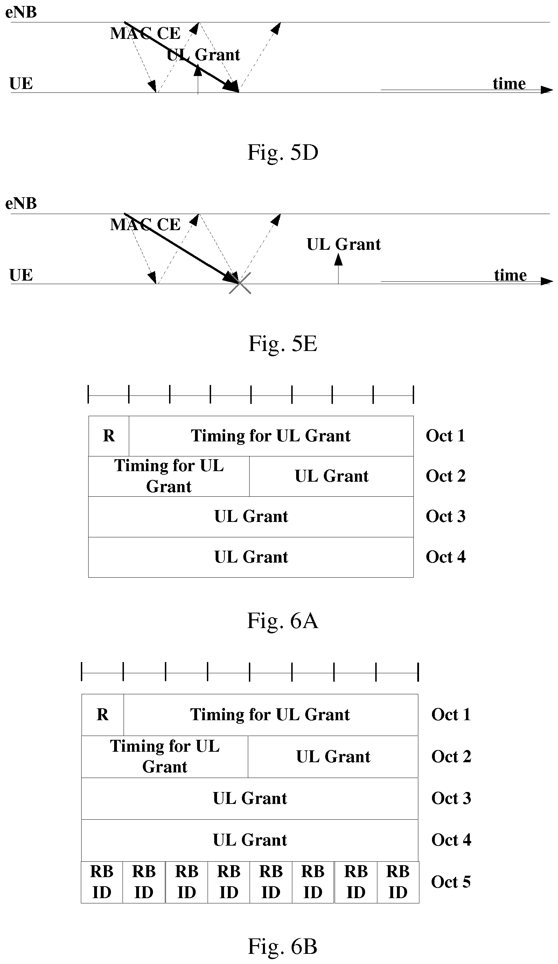

As shown in Fig. 5D, after receiving the MAC CE, if the UE finds that the time to perform uplink transmission indicated by corresponding UL Grant is out (in the case of indicating an absolute time, or in the case of indicating a time relative to the time at which eNB assembles and sends the MAC CE), then the UE ignores the UL Grant in the MAC CE and does not send data to the eNB. The eNB checks that the UE has not received the MAC CE successfully but the time indicated by UL Grant is (possibly) out, then the eNB can release the resource indicated by the UL Grant and allocate it to other UE.

As shown in Fig. 5E, if the eNB checks that the MAC PDU including the MAC CE fails to be transmitted successfully in the end after being retransmitted through HARQ (Hybrid Automatic Repeat Request, hybrid automatic repeat request), that is, the MAC CE is not received by the UE successfully, then the eNB can take back the resource indicated by the UL Grant and allocate it to other UE. If the eNB has no time to allocate the resource to other UE, then the eNB ignores the uplink transmission of the UL Grant indicated by the MAC CE, and will not schedule to retransmit even the uplink data are not received successively on the UL Grant, so as to avoid wasting more resource.

Based on the embodiment shown in Fig. 4 and Figs. 5A to 5E, since the eNB has basis for expectation or prediction when using the MAC CE to carry the uplink resource allocated for the UE, so when the UE uses the UL Grant, if the expectation of the eNB is met, that will be the best. On the basis of this, the above embodiment can have the following limiting condition, that is, the resource allocated by the MAC CE can only be used by data of a specific SRB (Signaling Radio Bearer, signaling radio bearer) or DRB (Data Radio Bearer, data radio bearer), and cannot be used by other SRB or DRB, thus, specific resource is for specific purpose. Of course, the uplink MAC CE does not belong to any SRB or DRB, and will not be limited by this. The limiting condition can also be that, the resource allocated by the MAC CE is for several SRB and/or DRB to use, and cannot be used by other SRB or DRB. Specifically, the following two modes can be adopted.

In the first mode, the eNB configures through a RRC message that which one and/or which ones of the SRB and/or DRB can use the uplink resource allocated by the MAC CE. When the UE receives the MAC CE, the UE can only transmit data of the SRB and/or DRB configured by the RRC on the uplink resource indicated by the MAC CE.

Possible corresponding format of the MAC CE is as shown in Fig. 6A, including: time and corresponding UL Grant; where R is a reserved bit, Timing For UL Grant is the uplink time corresponding to the UL Grant; UL Grant is uplink authorization, including physical resource, modulation and codec scheme, power control information etc. If the eNB want to schedule multiple uplink transmissions of the UE, then there may be multiple similar MAC CEs carried, or the format of the MAC CE is adjusted to a format which is able to send multiple UL Grants to the UE, or the format of the MAC CE is adjusted to a format which is able to send one UL Grant as well as the repeat times of the UL Grant and the time interval.

In the second mode, the eNB indicates in the MAC CE that the resource is for which one and/or which ones of SRB and/or DRB to use. After receiving the MAC CE, the UE can only transmit on the uplink resource indicated by the MAC CE the data of the SRB and/or the DRB which can use the resource, as indicated in the MAC CE. The possible corresponding format of the MAC CE is as shown in Fig. 6B, including: time, corresponding UL Grant and RB (Radio Bearer, radio bearer) which can use the UL Grant. Where R is a reserved bit, Timing For UL Grant is the uplink time corresponding to the UL Grant; UL Grant is uplink authorization, including physical resource, modulation and codec scheme, power control information etc.; RB ID is the corresponding position for the RB, represented by BitMap. Fig. 6B shows the mode of the BitMap (bitmap), where each RB occupies 1 bit, 0 represents the data of the RB cannot use, 1 represents the data of the RB can use; or it can explicitly carry RBID (Radio Bearer Identity, radio bearer identity) or LCID (Logical Channel Identity, logical channel identity) corresponding to the RB to represent the data of the RB can use. If the eNB want to schedule multiple uplink transmissions of the UE, then there may be multiple similar MAC CEs carried, or the format of the MAC CE is adjusted to a format which is able to send multiple UL Grants to the UE, or the format of the MAC CE is adjusted to a format which is able to send one UL Grant as well as the repeat times of the UL Grant and the time interval.

In addition, since the main object of using MAC CE is to reduce the PDCCH cost in scheduling, therefore, the MAC CE is multiplexed with the downlink data usually, and the priority of the MAC CE may higher or lower than the priority of the data; that is, the MAC CE will not be sent to the UE individually, but it will not be excluded in the embodiments of the present invention that MAC PDU sent to the UE only contains MAC CE.

For the situation that MAC PDU is transmitted through using the uplink resource allocated by the MAC CE, if the UE has no corresponding uplink data to transmit, then the UE can take the following process:
If all the RBs (Radio Bearer, radio bearer) can use the uplink resource indicated by the uplink resource allocation information carried by the MAC CE, then when there is no data to send or the data to send cannot fill up the resource, the UE can inform one or more than one RLC entity corresponding to the RB(s) according the size of the uplink resource to assemble a RLC status report, and send it to the ENB together with possible Padding BSR and/or Padding. Generally the RLC status report sent in that condition only includes the ACK (Acknowledgment, acknowledgment) of the data which has already been continuously and successfully received by the RLC, so as to avoid unnecessary retransmission by the peers when sending NACK (Negative Acknowledgment, negative acknowledgement); the UE can also transmit on the resource any one or any combination of CQI (Channel Quality Indicator, channel quality indicator), PHR (Power HeadRoom Report, power headroom report), PMI (Precoding Matrix Indicator, precoding matrix indicator), RI (Rank Indicator, rank indicator) and size and time of the uplink data the UE expects.

If the RRC or MAC CE indicates which RB can use the uplink resource allocated by the MAC CE, when there is no data to send or the data to send cannot fill up the resource, the UE can inform according to the size of the uplink resource the RLC entity or entities corresponding to one or more than one RB which can use the resource to assemble a RLC status report, and transmit the RLC status report together with possible Padding BSR and/or Padding to the ENB.

In addition, the feature of informing the RLC entity, assembling and sending the status report is not limited with using the resource allocated by the MAC CE, and is also not limited by the uplink resource. For the uplink and/or downlink resource allocated by PDCCH and resource configured using SPS (Semi Persistent Scheduling, semi persistent scheduling), if there is no data to send or the data to send cannot fill up the resource, the MAC layer can inform one or more than one RLC entity according to the size of the uplink resource to assemble a RLC status report and send it to the MAC for transmission. After receiving the request that the MAC layer requires a RLC status report, the RLC feedbacks a status report of the RLC PDU that has been received continuously and successfully (i.e. a status report of the data packets prior to VR(R), where VR(R) is a variable, representing the lower edge of the RLC receiving window in AM mode; the RLC PDU prior to VR(R) has been received by the receiving end continuously, the variable itself represents the number of the RLC PDU which is expected to receive next, i.e. the variable itself is a first uncontinuous number of the RLC PDU).

In the above embodiment of the method, the eNB performs scheduling through using the MAC CE in the MAC PDU for downlink data transmission to carry the uplink resource allocation information, so that the PDCCH cost is effectively reduced, especially in the case of there are large amount of small packets to transmit, thus the capacity of the system is increased as much as possible.

Those of ordinary skill in the art should understand that all or a part of the steps of the method according to the embodiments of the present invention may be implemented through hardware related to program instructions. The program may be stored in a computer readable storage medium; when executing the program, the steps of above method embodiments are executed. The storage medium includes ROM, RAM, disk, CD or all other medium that can store the program code.

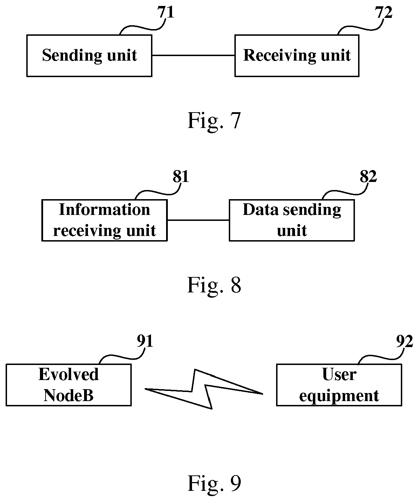

Fig. 7 is a schematic structure diagram of an evolved NodeB for realizing the above scheduling method of evolved NodeB in a long-term evolution system provided by an embodiment of the present invention. As shown in Fig. 7, the evolved NodeB includes a sending unit 71 and a receiving unit 72. The sending unit 71 is configured to send to a user equipment a downlink media access control protocol data unit, MAC PDU for transmitting downlink data. The downlink MAC PDU carries a media access control control element, MAC CE, and the MAC CE carries uplink resource allocation information for indicating uplink resource to the user equipment. For details of the uplink resource allocation information, please refer to the illustration in Step 21, the uplink resource allocation information can include at least one of the following parameters: physical resource allocated for the user equipment, modulation and codec scheme, size of the MAC PDU and time at which the user equipment is indicated to send a MAC PDU. In other words, the uplink resource allocation information includes but is not limited to the physical resource (such as position and size of the physical resource block) and/or the modulation and codec scheme and/or the size of the MAC PDU and/or the time at which the user equipment is indicated to send the MAC PDU. That is the sending unit 71 can be specifically configured to send at least one of the following parameters: the physical resource allocated for the user equipment, the modulation and codec scheme, the size of the MAC PDU and the time at which the user equipment is indicated to send the MAC PDU, so that after receiving the downlink MAC PDU, the user equipment sends the uplink MAC PDU to the evolved NodeB at the time indicated by the uplink resource allocation information carried by the MAC CE, through using the physical resource indicated by the uplink resource allocation information, according to the modulation and codec scheme and the size of the MAC PDU. For details of the uplink MAC PDU please refer to the illustration in Step 12, the uplink MAC PDU can include at least one of the following: data, BSR and other MAC CE.

The sending unit 71 can be specifically configured to send the uplink resource allocation information acquired through predicting by the evolved NodeB according to the downlink data information. That is, the uplink resource allocation information can be acquired through predicting by the evolved NodeB according to the downlink data information, in other words, the eNB can predict subsequent possible uplink data transmission with information of the downlink data, thus can allocate an uplink resource for the UE in advance, and use the MAC CE to carry the uplink resource allocation information allocated for UE.

The receiving unit 72 is configured to receive the uplink MAC PDU sent by the user equipment according to the uplink resource allocation information. For example, the receiving unit 72 can be specifically configured to receive the uplink MAC PDU sent by the user equipment to the evolved NodeB at the time using the physical resource and according to the modulation and codec scheme and the size of the MAC PDU, if the uplink resource allocation information includes the physical resource, the modulation and codec scheme, the size of the MAC PDU and the time at which the user equipment is indicated to send the MAC PDU. The sending unit 71 can be further configured to send at least one piece of the following information to the user equipment: information for indicating signaling radio bearer SRB or data radio bearer DRB which uses the physical resource when the user equipment sends uplink data, where the information is carried in the uplink resource allocation information, or in a RRC message.

The evolved NodeB provided by the embodiment of the present invention can further include a checking unit and a resource releasing unit.

The checking unit is configured to check whether the user equipment receives the MAC CE before the time, if the uplink resource allocation information includes the time at which the user equipment is indicated to send the MAC PDU. The resource releasing unit is configured to releases the physical resource allocated for the user equipment so as to allocate it to other user equipment to use, if the user equipment does not receive the MAC CE before the time. The MAC CE sent by the sending unit 71 includes logical channel identification and content, the value of the logical channel identification is used to identify the content as the uplink resource allocation information.

In the above embodiment of the evolved NodeB, the evolved NodeB uses the MAC CE to transmit scheduling commands through the sending unit sending the downlink MAC PDU which is configured to transmit the downlink data and carries the MAC CE, so that the PDCCH cost is saved effectively, especially in the case that there are large amount of small packets to transmit, thus the capacity of the system is increased as much as possible.

Fig. 8 is a schematic structure diagram of a user equipment for realizing the above data transmission method provided by an embodiment of the present invention. As shown in Fig. 8, an information receiving unit 81 and a data sending unit 82.

The information receiving unit 81 is configured to receive a downlink media access control protocol data unit, MAC PDU sent by a evolved NodeB for transmitting downlink data, where the downlink MAC PDU carries a media access control control element, MAC CE, and the MAC CE carries uplink resource allocation information for indicating uplink resource to the user equipment. For the details of the uplink resource allocation information, please refer to the illustration in the above method embodiments, the uplink resource allocation information can include at least one of the following parameters: physical resource allocated for the user equipment, modulation and codec scheme, size of the MAC PDU and time at which the user equipment is indicated to send the MAC PDU. That is to say, the information receiving unit 81 is specifically configured to receive at least one of the following parameters: the physical resource allocated for the user equipment, the modulation and codec scheme, the size of the MAC PDU and the time at which the user equipment is indicated to send the MAC PDU. For example, the MAC CE carries the physical resource allocated for the user equipment, the modulation and codec scheme, the size of the MAC PDU and the time at which the user equipment is indicated to send the MAC PDU.

The data sending unit 82 is configured to send an uplink MAC PDU to the evolved NodeB through using the uplink resource allocation information carried by the MAC CE. For example, the data sending unit 82 can be specifically configured to send at least of the following: data, buffer data report BSR and other MAC CE. The receiving unit 82 can be specifically configured to sent the uplink MAC PDU to the evolved NodeB at the time using the physical resource according to the modulation and codec scheme and the size of the MAC PDU, if the uplink resource allocation information includes the physical resource allocated for the user equipment, the modulation and codec scheme, the size of the MAC PDU and the time at which the user equipment is indicated to send the MAC PDU.

The MAC CE can also indicate SRB, DRB or SRB and DRB which can use the physical resource when the user equipment sends uplink data; that is, the information receiving unit 81 can be further configured to receive at least one piece of the following information sent by the evolved NodeB: information for indicating signaling radio bearer, SRB or data radio bearer, DRB which uses the physical resource when the user equipment sends the uplink data, where the information is carried in the uplink resource allocation information or in a RRC message. Here, the data sending unit 82 can be specifically configured so that, when the uplink MAC PDU sent to the evolved NodeB contains data, the data contained in the MAC PDU only includes data of the SRB, or DRB, or SRB and DRB for which the indication information has been allocated and sent by the evolved NodeB.

The data sending unit 82 can be specifically configured to send any one or combination of Padding BSR and Padding at the time, if the uplink resource allocation information includes the time at which the user equipment is indicated to send the MAC PDU, and if the user equipment has no data to send.

The user equipment provided by an embodiment of the present invention can further include: an informing unit, configured to inform a RLC entity corresponding to a RB according to the size of the uplink resource to assemble a RLC status report at the time indicated in the uplink resource allocation information for the user equipment to send the MAC PDU, if the user equipment has no data to send or the data to send cannot fill up the physical resource allocated in the uplink resource allocation information. For example, the informing unit can be specifically configured to inform the RLC entity corresponding to the RB indicated by the uplink resource allocation information according to the size of the uplink resource.

Here, the data sending unit 82 can be specifically configured to upload the RLC status report together with any one or combination the Padding BSR and the Padding at the time indicated in the uplink resource allocation information for the user equipment to send the MAC PDU. In the above embodiments of the user equipment, the user equipment is scheduled by the MAC CE through the information receiving unit receiving the downlink MAC PDU configured to transmit the downlink data and carrying the MAC CE, so that PDCCH cost is saved effectively, especially in the case that there are large amount of small packets to transmit, thus the capacity of the system is increased as much as possible.

Figure 9 is a schematic structure diagram of a long term evolution system for realizing the above scheduling method of evolved NodeB in a long term evolution system provided by an embodiment of the present invention. As shown in Fig. 9, the long term evolution system includes an evolved NodeB 91 and a user equipment 92, where the evolved NodeB 91 is wirelessly communicated with the user equipment 92. The evolved NodeB 91 can be any evolved NodeB provided by the above evolved NodeB embodiments, and the user equipment 92 can be any user equipment provided by the above user equipment embodiments. The MAC PDU sent by the evolved NodeB 91 to the user equipment 92 carries one or more than one MAC CE, the MAC CE carries uplink resource allocation information for indicating uplink resource to the user equipment 92. The uplink resource allocation information can include at least one of the following parameters: physical resource allocated for the user equipment, modulation and codec scheme, size of the MAC PDU and time at which the user equipment is indicated to send the MAC PDU. That is to say, the uplink resource allocation information includes, but is not limited to, the physical resource (such as position and size of the physical resource block) and/or the modulation and codec scheme and/or the size of the TB block (i.e. MAC PDU) uplink transmitted by the user equipment thorough using the resource indicated by the uplink resource allocation information carried in the MAC CE and/or the time at which the user equipment is indicated to send the MAC PDU. The user equipment 92 sends the uplink MAC PDU to the evolved NodeB 91 at the time indicated by the uplink resource allocation information using the physical resource indicated by the uplink resource allocation information according to the modulation and codec scheme and the size of the MAC PDU, after receiving the downlink MAC PDU, for details, please refer to the illustration in above method embodiments. The uplink MAC PDU can include at least one of the following: data to send, BSR and other MAC CE.

In the present embodiment, the evolved NodeB performs scheduling by using the MAC CE included in the downlink MAC PDU for downlink data transmission, so that the long term evolution system saves PDCCH cost effectively, especially in the case that there are large amount of small packets to transmit, thus increasing the capacity of the system as much as possible.

Finally, it should be noted that the above embodiments are merely provided for describing the technical solutions of the present invention, but not intended to limit the present invention. It should be understood by those of ordinary skill in the art that although the present invention has been described in detail with reference to the foregoing embodiments, modifications can be made to the technical solutions described in the foregoing embodiments, or equivalent replacements can be made to some technical features in the technical solutions, such modifications or replacements do not cause the essence of corresponding technical solutions to depart from the scope of the present invention as defined by the claims.

## Claims

1. A scheduling method of evolved NodeB in a long term evolution system, **characterized by** comprising:
sending (11), by an evolved NodeB to a user equipmemt, a downlink media access control protocol data unit, MAC PDU, for transmitting downlink data, wherein the downlink MAC PDU carries a media access control control element, MAC CE, and the MAC CE carries uplink resource allocation information for indicating an uplink resource to the user equipment;
receiving (12), by the evolved NodeB, an uplink MAC PDU sent by the user equipment according to the uplink resource allocation information;
wherein if the uplink resource allocation information comprises physical resource allocated for the user equipment, modulation and codec scheme, size of the MAC PDU and time at which the user equipment is indicated to send the MAC PDU, the receiving, by the evoveld NodeB, the uplink MAC PDU sent by the user equipment according to the uplink resource allocation information comprises:
receiving, by the evloved NodeB, the uplink MAC PDU sent by the user equipment to the evolved NodeB at the time using the physical resource according to the modulation and codec scheme and the size of the MAC PDU.

2. The scheduling method of evolved NodeB in a long term evolution system according to claim 1, wherein the evolved NodeB further sends at least one piece of following information to the user equipment: information for indicating signaling radio bearer, SRB or data radio bearer, DRB which uses the physical resource when the user equipment sends uplink data, wherein the at least one piece of information is carried in the uplink resource allocation information or in a RRC message.

3. The scheduling method of evolved NodeB in a long term evolution system according to claim 1, wherein if the uplink resource allocation information comprises the time at which the user equipment is indicated to send the MAC PDU, then the evolved NodeB checks whether the user equipment receives the MAC CE before the time;
if the user equipment does not receive the MAC CE before the time, the evolved NodeB releases the physical resource allocated for the user equipment so as to allocate to other user equipment to use.

4. The scheduling method of evolved NodeB in a long term evolution system according to claim 1, wherein the MAC CE comprises a logical channel identify and content, and a value of the logical channel identify is used to identify that the content is the uplink resource allocation information.

5. A method of data transmission performed by a User Equipment UE in a long term evolution system, the method **characterized by** comprising:
receiving (21) a downlink media access control protocol data unit, MAC PDU, sent by an evolved NodeB for transmitting downlink data, wherein the downlink MAC PDU carries a media access control control element, MAC CE, and the MAC CE carries uplink resource allocation information for indicating an uplink resource to a user equipment;
sending (22) an uplink MAC PDU to the evolved NodeB by using the uplink resource allocation information carried by the MAC CE;
wherein if the uplink resource allocation information comprises physical resource allocated for the user equipment, modulation and codec scheme, size of the MAC PDU and time at which the user equipment is indicated to send the MAC PDU;
then sending the uplink MAC PDU to the evolved NodeB by using any one or any combination of the parameters specifically comprises:
the user equipment sends the uplink MAC PDU to the evolved NodeB at the time using the physical resource according to the modulation and codec scheme and the size of the MAC PDU.

6. The method of data transmission according to claim 5, wherein the user equipment further receives at least one piece of following information sent by the evolved NodeB: information for indicating signaling radio bearer SRB or data radio bearer DRB which uses the physical resource when the user equipment sends uplink data, wherein the information is carried in the uplink resource allocation information or in a RRC message;
when the uplink MAC PDU sent by the user equipment to the evolved NodeB contains data, the data contained in the uplink MAC PDU only comprises data of the SRB, or DRB, or SRB and DRB for which indication information has been allocated and transmitted by the evoved NodeB.

7. The method of data transmission according to claim 5, wherein if the uplink resource allocation information comprises the time at which the user equipment is indicated to send the MAC PDU, then the user equipment sends any one or combination of Padding BSR and Padding at the time if the user equipment has no data to send.

8. The method of data transmission according to claim 7, wherein if a time at which the user equipment receives the MAC CE goes beyond the time contained in the uplink resource allocation information at which the user equipment is indicated to send the MAC PDU, then the user equipment ignores the uplink resource allocated for the user equipment carried in the MAC CE.

9. The method of data transmission according to claim 7, wherein at the time contained in the uplink resource allocation information at which the user equipment is indicated to send the MAC PDU, if the user equipment has no data to send or the data to be sent cannot fill up the physical resource allocated in the uplink resource allocation information, the user equipment informs a RLC entity corresponding to a RB according to a size of the uplink resource to assemble a RLC status report, and uploads the RLC status report together with any one or combination of Padding BSR and Padding at the time contained in the uplink resource allocation information at which the user equipment is indicated to send the MAC PDU,.

10. An evolved NodeB, **characterised by** comprising:
a sending unit (71), configured to send to a user equipment a downlink media access control protocol data unit MAC PDU for transmitting downlink data, wherein the downlink MAC PDU carries a media access control control clement MAC CE and the MAC CE carries uplink resource allocation information for indicating an uplink resource to the user equipment;
a receiving unit (72), configured to receive an uplink MAC PDU sent by the user equipment according to the uplink resource allocation information;
wherein if the uplink resource allocation information comprises physical resource allocated for the user equipment, modulation and codec scheme, size of the MAC PDU and time at which the user equipment is indicated to send the MAC PDU, the receiving unit (72) is further configured to receive the uplink MAC PDU sent by the user equipment to the evolved NodeB at the time using the physical resource according to the modulation and codec scheme and the size of the MAC PDU.

11. The evolved NodeB according to claim 10, wherein the sending unit is further configured to send at least one piece of following information to the user equipment: information for indicating SRB or DRB which uses physical resource allocated for the user equipment when the user equipment sends uplink data, wherein the information is carried in the uplink resource allocation information, or in a RRC message.

12. The evolved NodeB according to claim 10, further comprising:
a checking unit, if the uplink resource allocation information comprises time at which the user equipment is indicated to send the MAC PDU, configured to check whether the user equipment receives the MAC CE before the time;
a resource releasing unit, configured to release physical resource allocated for the user equipment so as to allocate to other user equipment, if the user equipment does not receive the MAC CE before the time.

13. A. user equipment, **characterized by** comprising:
an information receiving unit (81), configured to receive a downlink media access control protocol data unit, MAC PDU, sent by an evolved NodeB for transmitting downlink data, wherein the downlink MAC PDU carries a media access control control element, MAC CE, and the MAC CE carries uplink resource allocation information for indicating an uplink resource to the user equipment,
a data sending unit (82), configured to send an uplink MAC PDU to the evolved NodeB by using the uplink resource allocation information carried by the MAC CE;
wherein if the uplink resource allocation information comprises physical resource allocated for the user equipment, modulation and codec scheme, size of the MAC PDU and time at which the user equipment is indicated to send the MAC PDU; the data sending unit (82) is further configured to send the uplink MAC PDU to the evolved NodeB at the time using the physical resource according to the modulation and codec scheme and the size of the MAC PDU.

14. A long term evolution system, **characterized by** comprising an evolved NodeB (91) according to any one of claims 10-12 and a user equipment (92) according to claim 13.

## Patentansprüche

1. Planungsverfahren für einen "evolved NodeB" in einem LTE-System ("Long Term Evolution System"), **dadurch gekennzeichnet, dass** es umfasst:
Senden (11), durch einen evolved NodeB an eine Benutzerausrüstung, eine Downlink-Medienzugriffssteuerungsprotokoll-Dateneinheit, MAC-PDU ("media access control protocol data unit"), zum Übertragen von Downlink-Daten, wobei die Downlink-MAC-PDU ein Steuerungselement zur Medienzugriffssteuerung, MAC-CE ("media access control control element"), trägt, und das MAC-CE Uplink-Ressourcenzuweisungsinformationen trägt, um eine Uplink-Ressource an die Benutzerausrüstung anzuzeigen;
Empfangen (12) einer Uplink-MAC-PDU, die von der Benutzerausrüstung gemäß den Uplink-Ressourcenzuweisungsinformationen gesendet wird, durch den evolved NodeB,
wobei, wenn die Uplink-Ressourcenzuweisungsinformationen physische Ressourcen, die für die Benutzerausrüstung zugewiesen sind, Modulations- und Codecschema, Größe der MAC-PDU und Zeitpunkt, zu dem die Benutzerausrüstung angezeigt wird, um die MAC-PDU zu senden, umfassen, der Empfang der von der Benutzerausrüstung gemäß den Uplink-Ressourcenzuweisungsinformationen gesendeten Uplink-MAC-PDU durch den evolved NodeB umfasst:
Empfangen der Uplink-MAC-PDU, die von der Benutzervorrichtung an den evolved NodeB zu diesem Zeitpunkt gesendet wurde, unter Verwendung der physischen Ressource gemäß dem Modulations- und Codecschema und der Größe der MAC-PDU durch den evolved NodeB.

2. Planungsverfahren für evolved NodeB in einem LTE-System nach Anspruch 1, wobei der evolved NodeB ferner folgende Informationen an die Benutzerausrüstung sendet: Informationen zum Anzeigen von Signalisierungsfunkträger, SRB (signaling radio bearer), oder Datenfunkträger, DRB (data radio bearer), der die physische Ressource verwendet, wenn die Benutzerausrüstung Uplink-Daten sendet, wobei die mindestens eine Information in den Uplink-Ressourcenzuweisungsinformationen oder in einer RRC-Nachricht enthalten ist.

3. Planungsverfahren für evolved NodeB in einem LTE-System nach Anspruch 1, wobei, wenn die Uplink-Ressourcenzuweisungsinformationen den Zeitpunkt umfassen, zu dem der Benutzerausrüstung angezeigt wird, die MAC-PDU zu senden, dann überprüft der evolved NodeB, ob die Benutzerausrüstung das MAC-CE vor dem Zeitpunkt empfängt;
wenn das Benutzergerät das MAC-CE nicht vor dem Zeitpunkt erhält, gibt der evolved NodeB die für die Benutzerausrüstung zugewiesene physische Ressource frei, um sie anderen Benutzerausrüstungen zur Nutzung zuzuweisen.

4. Planungsverfahren für evolved NodeB in einem LTE-System nach Anspruch 1, wobei das MAC-CE eine logische Kanalidentifikation und einen Inhalt umfasst, und ein Wert der logischen Kanalidentifikation verwendet wird, um zu identifizieren, dass der Inhalt die Uplink-Ressourcenzuweisungsinformationen sind.

5. Verfahren zur Datenübertragung, das von einer Benutzerausrüstung UE in einem LTE-System durchgeführt wird, wobei das Verfahren **dadurch gekennzeichnet ist, dass** es umfasst:
Empfangen (21) einer MAC-PDU, die von einem evolved NodeB zum Übertragen von Downlink-Daten gesendet wird, wobei die Downlink-MAC-PDU ein MAC-CE, trägt und das MAC-CE Uplink-Ressourcenzuweisungsinformationen zum Anzeigen einer Uplink-Ressource an einer Benutzerausrüstung enthält;
Senden (22) einer Uplink-MAC-PDU an den evolved NodeB unter Verwendung der vom MAC-CE getragenen Uplink-Ressourcenzuweisungsinformationen;
wobei, wenn die Uplink-Ressourcenzuweisungsinformationen physische Ressourcen umfassen, die für die Benutzerausrüstung zugewiesen sind, Modulations- und Codecschema, Größe der MAC-PDU und Zeitpunkt, zu dem der Benutzerausrüstung angezeigt wird, die MAC-PDU zu senden;
und dann Senden der Uplink-MAC-PDU an den evolved NodeB unter Verwendung einer beliebigen oder jeder beliebigen Kombination der Parameter, die insbesondere umfasst:
die Benutzerausrüstung sendet die Uplink-MAC-PDU an den zu diesem Zeitpunkt evolved NodeB unter Verwendung der physikalischen Ressource gemäß dem Modulations- und Codecschema und der Größe der MAC-PDU.

6. Verfahren zur Datenübertragung nach Anspruch 5, wobei die Benutzerausrüstung ferner mindestens eine der folgenden Informationen empfängt, die vom evolved NodeB gesendet werden: Informationen zum Anzeigen von Signalisierungsfunkträger SRB oder Datenfunkträger DRB, der die physische Ressource verwendet, wenn die Benutzerausrüstung Uplink-Daten sendet, wobei die Informationen in den Uplink-Ressourcenzuweisungsinformationen oder in einer RRC-Nachricht übertragen werden;
wenn die von der Benutzervorrichtung an den evolved NodeB gesendete Uplink-MAC-PDU Daten enthält, die in der Uplink-MAC-PDU enthaltenen Daten nur Daten der SRB oder DRB, oder SRB und DRB umfassen, für die Indikationsinformationen vom evolved NodeB zugewiesen und übertragen wurden.

7. Verfahren zur Datenübertragung nach Anspruch 5, wobei, wenn die Uplink-Ressourcenzuweisungsinformationen den Zeitpunkt umfassen, zu dem der Benutzerausrüstung angezeigt wird, die MAC-PDU zu senden, dann sendet die Benutzerausrüstung eine beliebige oder eine Kombination von Padding BSR und Padding zu dem Zeitpunkt, zu dem die Benutzerausrüstung keine Daten zu senden hat.

8. Verfahren zur Datenübertragung nach Anspruch 7, wobei, wenn ein Zeitpunkt, zu dem die Benutzerausrüstung das MAC-CE empfängt, über den Zeitpunkt hinausgeht, der in den Uplink-Ressourcenzuweisungsinformationen enthalten ist, zu dem der Benutzerausrüstung angezeigt wird, die MAC-PDU zu senden, dann ignoriert die Benutzerausrüstung die Uplink-Ressource, die für die in dem MAC-CE getragene Benutzerausrüstung zugewiesen wurde.

9. Verfahren zur Datenübertragung nach Anspruch 7, wobei zu dem Zeitpunkt, der in den Uplink-Ressourcenzuweisungsinformationen enthalten ist, zu dem der Benutzerausrüstung angezeigt wird, die MAC-PDU zu senden, wenn die Benutzerausrüstung keine zu sendenden Daten hat oder die zu sendenden Daten die in den Uplink-Ressourcenzuweisungsinformationen zugewiesene physische Ressource nicht füllen können, die Benutzerausrüstung eine RLC-Einheit informiert, die einer RB entsprechend einer Größe der Uplink-Ressource entspricht, um einen RLC-Statusbericht zusammenzustellen, und den RLC-Statusbericht zusammen mit einer beliebigen oder einer Kombination von Padding BSR und Padding zu dem Zeitpunkt hochlädt, der in den Uplink-Ressourcenzuweisungsinformationen enthalten ist, bei denen der Benutzerausrüstung angezeigt wird, die MAC-PDU zu senden.

10. Ein evolved NodeB, **dadurch gekennzeichnet, dass** er umfasst:
eine Sendeeinheit (71), die zum Senden einer MAC-PDU zum Übertragen von Downlink-Daten an eine Benutzerausrüstung ausgelegt ist, wobei die Downlink-MAC-PDU ein MAC-CE trägt und das MAC-CE Uplink-Ressourcenzuweisungsinformationen zum Anzeigen einer Uplink-Ressource an die Benutzerausrüstung trägt;
eine Empfangseinheit (72), die zum Empfangen einer von der Benutzerausrüstung gesendeten Uplink-MAC-PDU gemäß den Uplink-Ressourcenzuweisungsinformationen ausgelegt ist;
wobei, wenn die Uplink-Ressourcenzuweisungsinformationen physische Ressourcen umfassen, die für die Benutzerausrüstung, das Modulations- und Codecschema, die Größe der MAC-PDU und den Zeitpunkt, zu dem der Benutzerausrüstung angezeigt wird, die MAC-PDU zu senden, zugewiesen sind, die Empfangseinheit (72) ferner zum Empfangen der von der Benutzerausrüstung an den evolved NodeB zu dem Zeitpunkt gesendeten Uplink-MAC-PDU ausgelegt ist, an dem die physische Ressource gemäß dem Modulations- und Codecschema und der Größe der MAC-PDU verwendet wird.

11. Evolved NodeB nach Anspruch 10, wobei die Sendeeinheit ferner zum Senden von mindestens einer der folgenden Informationen an die Benutzerausrüstung ausgelegt ist: Informationen zum Anzeigen von SRB oder DRB, die physische Ressourcen verwenden, die der Benutzerausrüstung zugewiesen sind, wenn die Benutzerausrüstung Uplink-Daten sendet, wobei die Informationen in den Uplink-Ressourcenzuweisungsinformationen oder in einer RRC-Nachricht übertragen werden.

12. Evolved NodeB nach Anspruch 10, ferner umfassend:
eine Prüfeinheit, wenn die Uplink-Ressourcenzuweisungsinformationen den Zeitpunkt umfassen, zu dem der Benutzerausrüstung angezeigt wird, die MAC-PDU zu senden, ausgelegt ist zum Prüfen, ob die Benutzerausrüstung den MAC-CE vor dem Zeitpunkt erhält;
eine Ressourcenfreigabeeinheit, die zum Freigeben der für die Benutzerausrüstung zugewiesenen physischen Ressourcen ausgelegt ist, um diese anderen Benutzerausrüstungen zuzuweisen, wenn die Benutzerausrüstung den MAC-CE nicht vor Ablauf der Zeit erhält.

13. Benutzerausrüstung, **dadurch gekennzeichnet, dass** sie umfasst:
eine Informationsempfangseinheit (81), die zum Empfangen einer Downlink-Medienzugriffssteuerungsprotokoll-Dateneinheit, MAC-PDU, ausgelegt ist, die von einem evolved NodeB zum Übertragen von Downlink-Daten gesendet wird, wobei die Downlink-MAC-PDU ein MAC-CE, trägt und das MAC-CE Uplink-Ressourcenzuweisungsinformationen zum Anzeigen einer Uplink-Ressource an die Benutzerausrüstung enthält;
eine Datensendeeinheit (82), die zum Senden einer Uplink-MAC-PDU an den evolved NodeB unter Verwendung der vom MAC-CE getragenen Uplink-Ressourcenzuweisungsinformationen ausgelegt ist;
wobei, wenn die Uplink-Ressourcenzuweisungsinformationen physische Ressourcen umfassen, die für die Benutzerausrüstung zugewiesen sind, Modulations- und Codecschema, Größe der MAC-PDU und Zeitpunkt, zu dem der Benutzerausrüstung angezeigt wird, die MAC-PDU zu senden; die Datensendeeinheit (82) ferner zum Senden der Uplink-MAC-PDU an den evolved NodeB zu diesem Zeitpunkt unter Verwendung der physischen Ressource gemäß dem Modulations- und Codecschema und der Größe der MAC-PDU ausgelegt ist.

14. LTE-System, **dadurch gekennzeichnet, dass** es einen evolved NodeB (91) nach einem der Ansprüche 10-12 und eine Benutzerausrüstung (92) nach Anspruch 13 umfasst.

## Revendications

1. Procédé de planification d'un NoeudB évolué dans un système d'évolution à long terme, **caractérisé en ce qu'**il comprend :
l'envoi (11), par un NoeudB évolué à un équipement utilisateur, d'une unité de données de protocole de commande d'accès au support de liaison descendante, MAC PDU, pour transmettre des données de liaison descendante, la MAC PDU de liaison descendante comportant un élément de commande pour la commande d'accès du support, MAC CE, et le MAC CE comportant des informations d'allocation de ressources de liaison montante pour indiquer une ressource de liaison montante à l'équipement utilisateur ;
la réception (12), par le NoeudB évolué, d'une MAC PDU de liaison montante envoyée par l'équipement utilisateur conformément aux informations d'allocation de ressources de liaison montante ;
dans lequel si les informations d'allocation de ressources de liaison montante comprennent une ressource physique allouée à l'équipement utilisateur, un plan de modulation et de codec, une taille de la MAC PDU et un temps indiquant quand l'équipement utilisateur doit envoyer la MAC PDU, la réception, par le NoeudB évolué, de la MAC PDU de liaison montante envoyée par l'équipement utilisateur conformément aux informations d'allocation de ressources de liaison montante comprend :
la réception, par le NoeudB évolué, de la MAC PDU de liaison montante envoyée par l'équipement utilisateur au NoeudB évolué au temps indiqué en utilisant la ressource physique conformément au plan de modulation et de codec et à la taille de la MAC PDU.

2. Procédé de planification d'un NoeudB évolué dans un système d'évolution à long terme selon la revendication 1, dans lequel le NoeudB évolué envoie en outre au moins un élément des informations suivantes à l'équipement utilisateur : des informations pour indiquer un support radio de signalisation, SRB ou un support radio de données, DRB qui utilise la ressource physique quand l'équipement utilisateur envoie des données de liaison montante, dans lequel l'au moins un élément d'information est inclus dans les informations d'allocation de ressources de liaison montante ou dans un message RRC.

3. Procédé de planification d'un NoeudB évolué dans un système d'évolution à long terme selon la revendication 1, dans lequel si les informations d'allocation de ressources de liaison montante comprennent le temps indiquant quand l'équipement utilisateur doit envoyer la MAC PDU, le NoeudB évolué vérifie alors que l'équipement utilisateur reçoit ou non le MAC CE avant le temps indiqué ;
si l'équipement utilisateur ne reçoit pas le MAC CE avant le temps indiqué, le NoeudB évolué libère la ressource physique allouée à l'équipement utilisateur en vue de l'allouer à un autre équipement utilisateur.

4. Procédé de planification d'un NoeudB évolué dans un système d'évolution à long terme selon la revendication 1, dans lequel le MAC CE comprend une identité de canal logique et un contenu, et une valeur de l'identité de canal logique sert à identifier que le contenu consiste en les informations d'allocation de ressources de liaison montante.

5. Procédé de transmission de données effectué par un équipement utilisateur, UE, dans un système d'évolution à long terme, le procédé étant **caractérisé en ce qu'**il comprend :
la réception (21) d'une unité de données de protocole de commande d'accès au support de liaison descendante, MAC PDU, envoyée par un NoeudB évolué pour transmettre des données de liaison descendante, la MAC PDU de liaison descendante comportant un élément de commande pour la commande d'accès du support, MAC CE, et le MAC CE comportant des informations d'allocation de ressources de liaison montante pour indiquer une ressource de liaison montante à un équipement utilisateur ;
l'envoi (22) d'une MAC PDU de liaison montante au NoeudB évolué en utilisant les informations d'allocation de ressources de liaison montante incluses dans le MAC CE ;
dans lequel si les informations d'allocation de ressources de liaison montante comprennent une ressource physique allouée à l'équipement utilisateur, un plan de modulation et de codec, une taille de la MAC PDU et un temps indiquant quand l'équipement utilisateur doit envoyer la MAC PDU ;
l'envoi de la MAC PDU de liaison montante au NoeudB évolué en utilisant l'un quelconque ou n'importe quelle combinaison des paramètres comprend alors spécifiquement :
l'envoi par l'équipement utilisateur de la MAC PDU de liaison montante au NoeudB évolué au temps indiqué en utilisant la ressource physique conformément au plan de modulation et de codec et à la taille de la MAC PDU.

6. Procédé de transmission de données selon la revendication 5, dans lequel l'équipement utilisateur reçoit en outre au moins un élément des informations suivantes envoyé par le NoeudB évolué : des informations indiquant un support radio de signalisation SRB ou un support radio de données DRB qui utilise la ressource physique quand l'équipement utilisateur envoie des données de liaison montante, dans lequel les informations sont incluses dans les informations d'allocation de ressources de liaison montante ou dans un message RRC ;
quand la MAC PDU de liaison montante envoyée par l'équipement utilisateur au NoeudB évolué contient des données, les données contenues dans la MAC PDU de liaison montante comprennent uniquement des données de SRB, ou DRB, ou SRB et DRB auxquels des informations d'indication ont été allouées et transmises par le NoeudB évolué.

7. Procédé de transmission de données selon la revendication 5, dans lequel si les informations d'allocation de ressources de liaison montante comprennent le temps indiquant l'équipement utilisateur doit envoyer la MAC PDU, l'équipement utilisateur envoie alors n'importe lequel ou une combinaison de BSR de bourrage et de bourrage au temps indiqué si l'équipement utilisateur n'a pas de données à envoyer.

8. Procédé de transmission de données selon la revendication 7, dans lequel si un temps auquel l'équipement utilisateur reçoit le MAC CE dépasse le temps contenu dans les informations d'allocation de ressources de liaison montante indiquant quand l'équipement utilisateur doit envoyer la MAC PDU, l'équipement utilisateur ignore alors la ressource de liaison montante allouée à l'équipement utilisateur incluse dans le MAC CE.

9. Procédé de transmission de données selon la revendication 7, dans lequel au temps contenu dans les informations d'allocation de ressources de liaison montante indiquant quand l'équipement utilisateur doit envoyer la MAC PDU, si l'équipement utilisateur n'a pas de données à envoyer ou les données à envoyer ne remplissent pas la ressource physique allouée dans les informations d'allocation de ressources de liaison montante, l'équipement utilisateur informe une entité RLC correspondant à un RB conformément à une taille de la ressource de liaison montante pour assembler un rapport d'état de RLC, et charge en amont le rapport d'état de RLC avec l'un quelconque ou une combinaison de BSR de bourrage et de bourrage au temps contenu dans les informations d'allocation de ressources de liaison montante indiquant quand l'équipement utilisateur doit envoyer la MAC PDU.

10. NoeudB évolué, **caractérisé en ce qu'**il comprend :
une unité d'envoi (71), configurée pour envoyer à un équipement utilisateur une unité de données de protocole de commande d'accès au support de liaison descendante, MAC PDU, pour transmettre des données de liaison descendante, la MAC PDU de liaison descendante comportant un élément de commande pour la commande d'accès du support, MAC CE, et le MAC CE comportant des informations d'allocation de ressources de liaison montante pour indiquer une ressource de liaison montante à l'équipement utilisateur ;
une unité de réception (72), configurée pour recevoir une MAC PDU de liaison montante envoyée par l'équipement utilisateur conformément aux informations d'allocation de ressources de liaison montante ;
dans lequel si les informations d'allocation de ressources de liaison montante comprennent une ressource physique allouée à l'équipement utilisateur, un plan de modulation et de codec, une taille de la MAC PDU et un temps indiquant quand l'équipement utilisateur doit envoyer la MAC PDU, l'unité de réception (72) est configurée en outre pour recevoir la MAC PDU de liaison montante envoyée par l'équipement utilisateur au NoeudB évolué au temps indiqué en utilisant la ressource physique conformément au plan de modulation et de codec et à la taille de la MAC PDU.

11. NoeudB évolué selon la revendication 10, dans lequel l'unité d'envoi est configurée en outre pour envoyer au moins un élément des informations suivantes à l'équipement utilisateur : des informations pour indiquer un SRB ou DRB qui utilise la ressource physique allouée à l'équipement utilisateur quand l'équipement utilisateur envoie des données de liaison montante, dans lequel les informations sont incluses dans les informations d'allocation de ressources de liaison montante ou dans un message RRC.

12. NoeudB évolué selon la revendication 10, comprenant en outre :
une unité de vérification, si les informations d'allocation de ressources de liaison montante comprennent le temps indiquant quand l'équipement utilisateur doit envoyer la MAC PDU, configurée pour vérifier que l'équipement utilisateur reçoit ou non le MAC CE avant le temps indiqué ;
une unité de libération de ressource, configurée pour libérer la ressource physique allouée à l'équipement utilisateur pour l'allouer à un autre équipement utilisateur, si l'équipement utilisateur ne reçoit pas le MAC CE avant le temps indiqué.

13. Equipement utilisateur, **caractérisé en ce qu'**il comprend :
une unité de réception d'informations (81), configurée pour recevoir une unité de données de protocole de commande d'accès au support de liaison descendante, MAC PDU, envoyée par un NoeudB évolué pour transmettre des données de liaison descendante, la MAC PDU de liaison descendante comportant un élément de commande pour la commande d'accès du support, MAC CE, et le MAC CE comportant des informations d'allocation de ressources de liaison montante pour indiquer une ressource de liaison montante à l'équipement utilisateur ;
une unité d'envoi de données (82), configurée pour envoyer une MAC PDU de liaison montante au NoeudB évolué en utilisant les informations d'allocation de ressources de liaison montante incluses dans le MAC CE ;
dans lequel si les informations d'allocation de ressources de liaison montante comprennent une ressource physique allouée à l'équipement utilisateur, un plan de modulation et de codec, une taille de la MAC PDU et un temps indiquant quand l'équipement utilisateur doit envoyer la MAC PDU ; l'unité d'envoi de données (82) est configurée en outre pour envoyer la MAC PDU de liaison montante au NoeudB évolué au temps indiqué en utilisant la ressource physique conformément au plan de modulation et de codec et à la taille de la MAC PDU.

14. Système d'évolution à long terme, **caractérisé en ce qu'**il comprend un NoeudB évolué (91) selon l'une quelconque des revendications 10 à 12 et un équipement utilisateur (92) selon la revendication 13.
